# EUROPEAN PATENT APPLICATION

(11) **EP 2 672 658 A1**
(43) Date of publication of application: **11.12.2013**
(21) Application number: 12305651.7
(22) Date of filing: 07.06.2012
(51) Int. Cl.: H04L 12/24

(54) **Method for querying data from a multitude of customer-premises equipment devices, respective system and device using the method**

(71) Applicant: Thomson Licensing, 92130 Issy-les-Moulineaux (FR)
(72) Inventor: van de Poel, Dirk, 2630 AARTSELAAR (BE); Chanet, Dominique, 9310 Aalst (BE); Goemaere, Geert, 2900 Schoten (BE)
(74) Representative: Arnold, Klaus-Peter

(57) **Abstract**

The method and the system for querying data from a multitude of customer-premises equipment devices (2, 3, 30) via a wide area network use the steps of utilizing a query server (20) for sending of a multicast query towards the customer-premises equipment devices, for requesting data from the customer-premises equipment devices, the customer-premises equipment devices evaluating the requests, and when a response is required, the customer-premises equipment devices establishing a connection to an auto configuration server (4) being separate from the query server(20), and reporting the requested data to the auto configuration server. The query server is arranged in particular within a network service provider network and operates in parallel with the auto configuration server. The customer-premises equipment devices include in particular a query agent (34) for operating with the query server(20).

## Description

### TECHNICAL FIELD

The invention relates to the field of customer premises equipment devices, in particular to remotely and/or centrally managed customer premises equipment devices coupled via a broadband connection to a service provider delivering broadband services to a customer.

### BACKGROUND OF THE INVENTION

Residential gateways are widely used to connect devices in a home of a customer to the Internet or any other wide area network (WAN). Residential gateways use in particular digital subscriber line (DSL) technology that enables a high data rate transmission over copper lines. During the years, several DSL standards have been established differing in data rates and in range, for example ADSL and VDSL, which are referred to in this context as xDSL. But also optical fiber transmission systems for Internet services are well known, for example fiber-to-the-home (FTTH) and fiber-to-the premises (FTTP).

Network operators, e.g. Internet service providers (ISP), have to manage a large amount, up to millions, of residential gateways, also other devices such as routers, switches, telephones and set-top boxes, which are understood in this context as customer premises equipment (CPE) devices. Remote management of CPE devices can be achieved by means of a central configuration server (CCS) which interacts with individual CPE devices to provide them with configuration settings and to extract diagnostics information by using a specific application layer protocol.

A widely used example of a CPE remote management is known as the CPE WAN management protocol (CWMP), which was developed by the Broadband Forum and defined by a technical report 069, also commonly referred to as TR-069. The CWMP defines an application layer protocol for remote management of end user devices, in particular of CPE devices, by providing a communication protocol between the CPE devices and an auto configuration server (ACS).

The CWMP is used in combination with device management data models. Data models are defined by the Broadband Forum in separate documents, for example in document TR-181i2, which defines a generic data model that can be applied to gateways and similar devices, and the document TR-135, by which set-top box specific data model parameters are defined.

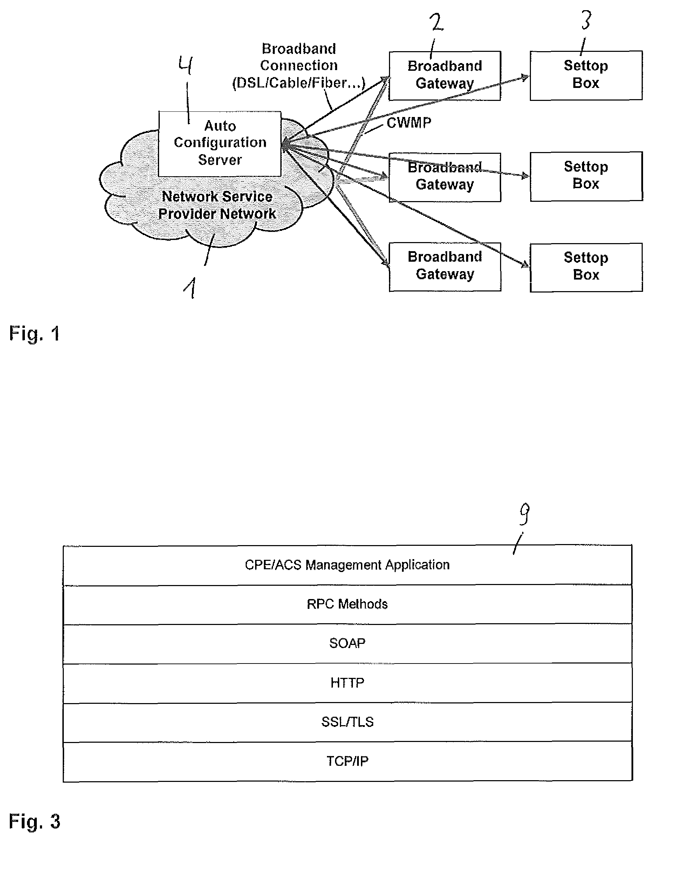

A wide area network of this kind providing xDSL services for CPE devices is schematically shown in Fig. 1: a network service provider (NSP) network 1 is arranged for providing e.g. Internet services to a multitude of residential gateways 2 and set-top boxes 3 via a broadband connection, DSL/Cable/Fiber. In addition, the NSP network 1 includes an ACS 4 for remotely managing the residential gateways 2 and set-top boxes 3. By using the TR-069 protocol, CWMP, the ACS 4 is in particular capable of auto configuration and dynamic service provisioning, software/firmware image management, status and performance monitoring and diagnostics for the residential gateways 2 and set-top boxes 3.

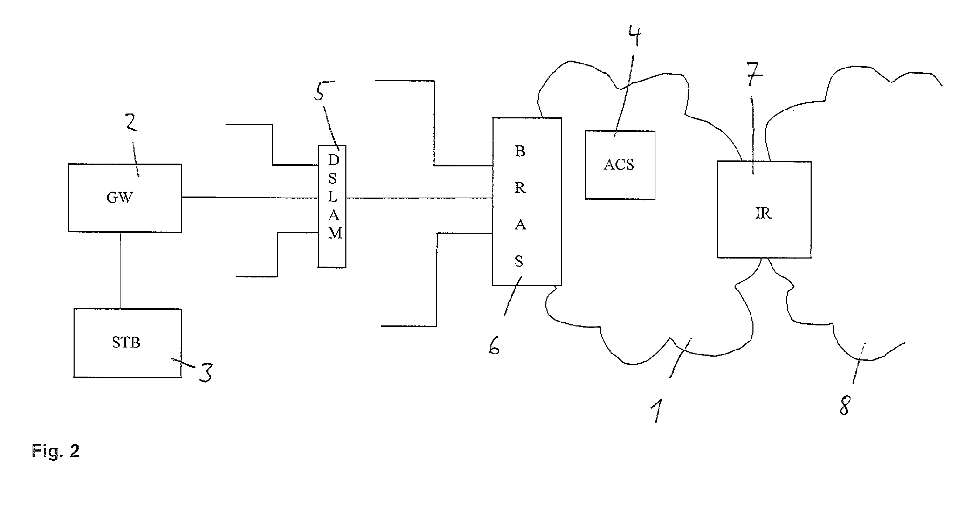

In more detail, the wide area network as described with regard to Fig. 1 may be arranged as depicted in Fig. 2: the NSP network 1 of an Internet service provider (ISP) is connected via an Internet router 7 with the global Internet 8 for providing Internet services to CPE devices 2, 3. The connection between the NSP network 1 and a residential gateway 2 is provided by using a broadband remote access server (BRAS) 6 and a digital subscriber line access multiplexer (DSLAM) 5. The BRAS 6 is usually provided within a central office of the ISP, together with the auto configuration server 4 and the Internet router 7, whereas the DSLAM 5 is located close to the CPE devices 2, 3.

As depicted in Fig. 3, the CWMP, as defined in TR-069, is a CPE/ACS management application 9 which uses in particular Internet protocols and other protocols. The Transmission Control Protocol and Internet Protocol (TCP/IP) and the Hypertext Transfer Protocol (HTTP) are application layer protocols of the Internet protocol suite, also the Transport Layer Security (TLS) and its predecessor Secure Socket Layer (SSL), which are used for providing security. The Simple Object Access Protocol (SOAP) is a protocol specification for exchanging structured information in computer networks. Also Remote Procedure Call (RPC) methods are used by the CWMP for requesting data from a CPE device.

Each CPE device may establish a management transaction connection to the ACS, for example when it is switched on the first time by a user for providing an Internet connection. Also, the ACS can initiate a connection to a single CPE device at each point in time by issuing a connection request to the CPE device. During a management transaction, the ACS can interrogate the CPE device for retrieving objects, parameters and their values, and make configuration changes. Each management transaction is always a one-to-one transaction between a single CPE device and the ACS. The ACS is limited to fetching specific objects or parameters from the device management data model of a respective CPE device.

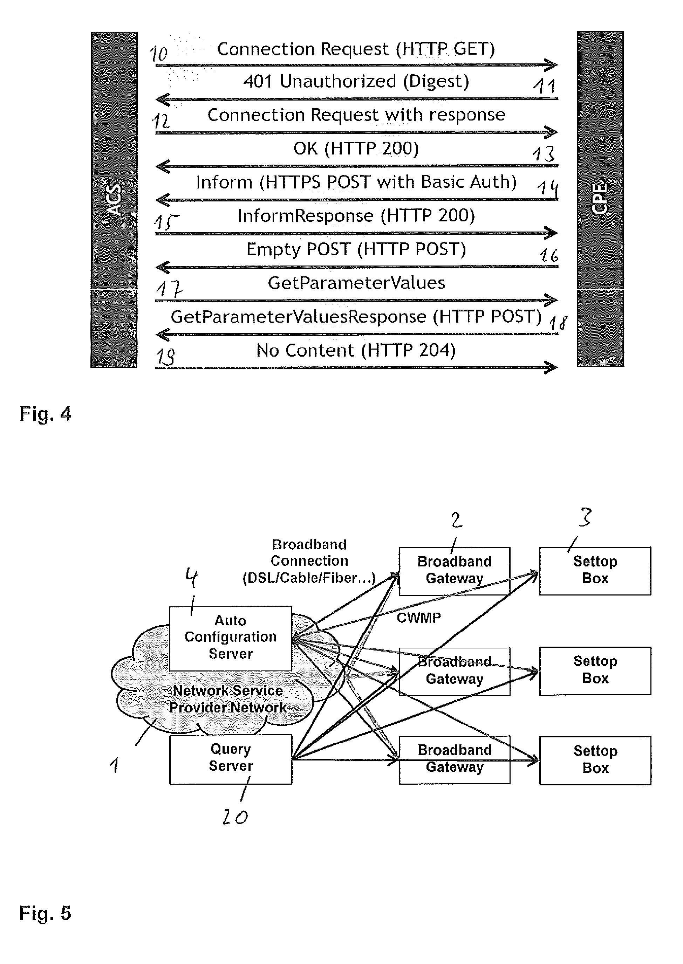

A typical management transaction between an ACS 4 and a CPE device 2, 3 for collecting potentially interesting data is described now with regard to Fig. 4. The communication message flow starts with a connection request from the ACS to the CPE, a HTTP GET command, step 10. The CPE device responds with a HTTP 401 "unauthorized status" message, step 11, which is a part of the HTTP authentication process. The ACS repeats then the connection request with a "Connection Request with Response" message, step 12. After a successful authentication, the CPE device responds immediately with a HTTP 200 command "OK", step 13, and informs the ACS via a HTTPS POST command providing basic authentication of the CPE device, step 14. In a next step 15, the ACS issues an HTTP response with status code "200 OK" to send an "InformResponse" message to the CPE device. The CPE device replies with an HTTP POST message with an empty message body, henceforth called "EmptyPOST", step 16. In a further step 17, the ACS requests the parameter values from the CPE device by using the GET command "GetParameterValues". The CPE device responds with a HTTP POST message "GetParameterValuesResponse", step 18, sending the parameter values. In a final step 19, the ACS terminates the management transaction by sending a HTTP 204 status command "No Content", an empty HTTP response.

The CWMP does allow the ACS to subscribe to active or passive notifications, triggering an Inform message whenever the subscribed-to parameter values in the data model change, but the CWMP does not support querying or a selective data collection. The procedure as described with regard to Fig. 4 has to be provided for every single CPE device and if the ACS is interested in only a single information of the CPE device, e.g. the average over a set of parameter values or the parameter values that exceed a given threshold, it needs to collect all related data and has to provide the investigation and filtering on the NSP network server site.

US 2008/0181240 A1 discloses a CPE management system, which includes a CPE data collection system transmitting commands via Internet to query a plurality of CPE devices in multiple concurrent sessions. US 6,249,814 describes a method and apparatus for identifying devices in a network, which uses a management discovery protocol for issuing a multicast query packet over a wide area network to perform automatic discovery of CPE devices.

### SUMMARY OF THE INVENTION

The method for querying data from a multitude of customer-premises equipment devices via a wide area network comprises the steps of utilizing a query server for sending of a multicast query towards the customer-premises equipment devices, for requesting data from the customer-premises equipment devices, the customer-premises equipment devices evaluating the requests, and when a response is required, the customer-premises equipment devices establishing a connection to an auto configuration server being separate from the query server, and reporting the requested data to the auto configuration server.

The query server is arranged in particular within a network service provider network and operates in parallel with the auto configuration server. The auto configuration server can be separate from the query server, or the auto configuration server may act as the query server. The multicast query is sent advantageously to all of the customer-premises equipment devices in accordance with a device management data model, or the multicast query is sent to all of the customer-premises equipment devices connected to the query server and/or connected to the auto configuration server. For sending of the multicast query, advantageously a UDP datagram protocol is used, and the customer-premises equipment devices use a unicast message for reporting the requested data to the auto configuration server.

In a further aspect of the invention, a system comprises a multitude of customer-premises equipment devices, an auto configuration server coupled with the customer-premises equipment devices, and a query server for sending of a multicast query towards the customer-premises equipment devices, for requesting data from the customer-premises equipments, wherein the customer-premises equipment devices evaluate the requests, and when a response is required, the customer-premises equipment devices establish a connection to the auto configuration server, and report the requested data to the auto configuration server. The auto configuration server and the query server are in particular a part of a network service provider network.

The customer-premises equipment devices of the system comprise advantageously a device management data model, a CWMP agent, a connection request server and a query agent for operating with the query server and the auto configuration server. The query agent is used in particular for establishing the connection to the auto configuration server by using a TR-069 management protocol. The customer-premises equipment devices are for example residential gateways, set-top boxes or cell phones, or any other centrally managed device.

### BRIEF DESCRIPTION OF THE DRAWINGS

Preferred embodiments of the invention are explained in more detail below by way of example with reference to schematic drawings, which show:
- Fig. 1: a wide area network according to prior art, including CPE devices and a network service provider network for providing xDSL services,
- Fig. 2: a more detailed view of the wide area network of Fig. 1,
- Fig. 3: applications used by a TR-069 CPE WAN management protocol for a remote management of CPE devices according to prior art,
- Fig. 4: a management transaction between an auto configuration server and a CPE device of the wide area network of Fig. 1 for collecting data according to prior art,
- Fig. 5: a wide area network according to the invention,
- Fig. 6: a CPE device according to the invention, and
- Fig. 7: a management transaction between an auto configuration server and a CPE device for collecting data according to the invention.

### DETAILED DESCRIPTION OF PREFERRED EMBODIMENTS

In the following description, example methods and systems for querying data from a multitude of customers premises equipment (CPE) devices via a wide area network are described. For purposes of explanation, numerous specific details are set forth in order to provide a thorough understanding of preferred embodiments. It will be evident, however, to one skilled in the art that the present invention may be practiced without these specific details.

The method and system for querying data from a multitude of CPE devices uses a complementary mechanism to the CPE WAN management protocol (CWMP) to enable a network service provider (NSP) to query data from a large number of CPE devices in a very efficient manner, while remaining compliant with the Broadband Forum TR-069 management protocol, hence being compatible to an existing NSP infrastructure, in particular being compatible to an auto configuration server (ACS) of the NSP infrastructure. The invention proposes to include a query server that initiates multicast queries towards CPE devices connected to a NSP network, which may be millions of CPE devices. Each CPE device listens to a multicast query and validates whether this is a valid and authentic query, and when needing to respond, each CPE device resolves the query and establishes a connection to the ACS to autonomously report the query data, respectively the requested information.

A preferred embodiment of the system of the present invention is schematically depicted in Fig. 5. The system includes a NSP network 1 for providing services towards a multitude of CPE devices, for example providing Internet services to residential gateways 2 and set-top boxes 3, as described before with regard to Fig. 1. The NSP network 1 includes in particular an ACS 4 for remotely managing the CPE devices, e.g. by using the TR-069 protocol. For the connection between the NSP network 1 and the CPE devices 2, 3, any broadband connection may be used, e.g. xDSL, television cable or optical fiber networks. The NSP network 1 may be coupled to the CPE devices for example via a BRAS and DSLAMs constituting a wide area network, as described with regard to Figs. 1 and 2.

The NSP network 1 includes further a query server 20, arranged for sending of multicast queries towards the CPE devices 2, 3, for requesting data or any information from the CPE devices 2, 3. The CPE devices evaluate each request, and when a response is required, each CPE device establishes a connection to the ACS 4 arranged within the NSP network 1 and reports the requested data or information to the ACS 4.

The query is expressed in particular in a query language, e.g. by using SQL (Structured Query Language)or XPATH (XML Path Language) applied to a respective CPE supported data model, and the query is sent advantageously as a User Datagram Protocol (UDP) datagram by using a multicast IP address. The query server 20 is arranged advantageously in parallel with the ACS 4 within the NSP network 1, to allow independent operation of the ACS 4. Alternatively, the ACS 4 may include the functionality of the query server 20 to act as a query server. The query server 20 may send the multicast queries to all of the CPE devices 2, 3 connected to the NSP network 1, or to specific CPE devices in accordance with a CPE device data model, e.g. a TR-181i2 data model as applied to gateways 2 or a TR-135 data model as applied to set-top boxes 3.

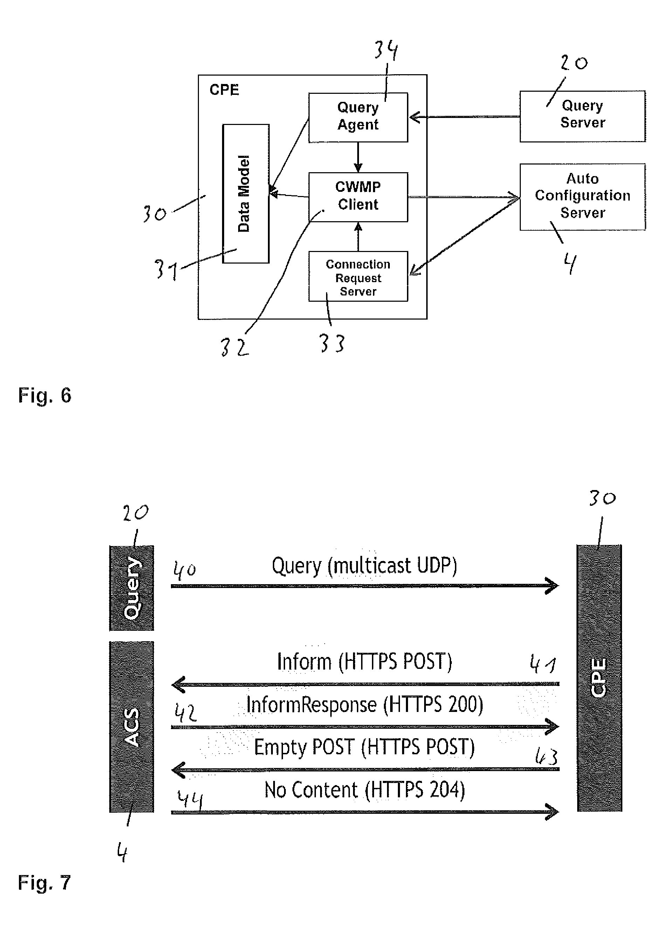

A preferred embodiment of a CPE device 30, which may be a residential gateway 2 or a set-top box 3, according to the invention is shown in Fig. 6. The CPE device 30 includes a device management data model 31 for the operation of the CPE device 30, e.g. the data model TR-181i2, which is a technical report defining a data model for all types of TR-069 enabled devices, including end devices, residential gateways and other network infrastructure devices. The device management data model 31 includes in particular basic device information, time of day configuration settings, network interface and protocol stack configuration, routing and bridging management, throughput statistics, and diagnostic tests.

The CPE device 30 includes further a CWMP agent 32 for establishing CWMP management transactions with an auto-configuration server (ACS) 4, which is managed for example by a network service provider or an Internet service provider. The CPE device 30 includes typically a secured Internet HTTPS URL (uniform resource locator) of the ACS 4 for connecting with the ACS 4. The CWMP management transactions are performed in particular by means of the TR-069 management protocol, for providing auto-configuration and dynamic service provisioning, software/firmware image management, status and performance monitoring and diagnostics of the CPE device 30.

The CPE device 30 includes in addition a connection request server 33 for operating with the ACS 4. The connection request server 33 is in particular a server that listens to HTTP connection requests originated by the ACS 4, as defined in the TR-069 management protocol. Upon successful authentication, the connection request server 33 triggers the CWMP agent 32 to establish a CWMP management transaction towards the ACS 4.

The CPE device 30 includes further a query agent 34, which listens to multicast queries of the query server 20, as described with regard to Fig. 5. The query agent 34 is in particular an application that listens for multicast query UDP datagrams originating from the query server 20. The group IP address and port number to listen to may be preconfigured on the CPE device 30 for deployment in a given NSP network, e.g. of the Internet service provider, or may be provided to the CPE 30 via the ACS 4. Upon receipt of a query from the query server 20, the CPE device 30 performs the query on the CPE device management data model 31 and if there are any results to report, it triggers the CWMP agent 32 to establish a CWMP connection to the ACS 4 to report these results.

A query communication flow between an ACS 4 and a query server 20 of a NSP network and CPE devices 30 of the wide area network in accordance with the invention is shown in Fig. 7. The wide area network is in particular a network as described with regard to Fig. 5, including a multitude of CPE devices. The ACS 4 is a remote management server that implements and complies in this embodiment with the CWMP TR-069 management protocol.

In a first step, the query server 20 builds a data query, e.g. a technician formulates the query via a query server management console. The query is expressed in a query language, for example, but not limited to, XPath, applied to a supported device management data model of all of the CPE devices 30 of the wide area network.

The query is secured, for example by signing it with a RSA private key of the query server 20 so that all CPE devices 30 will verify this signature by using the query server 20 public key, which is pre-installed on all CPE devices 30 for a given NSP network. Alternatively, a shared symmetrical key may be used. The query is sent as an UDP datagram payload to a multicast IP (Internet Protocol) address to which the CPE query agent 34 of each CPE device 30 subscribes, step 40. It is assumed that the NSP network accommodates multicast, which can be similar for example to the usage of multicast for broadcast IPTV.

In a further step, the query agent 34 of each CPE device 30 receives the UDP datagram containing a query on the multicast IP address. The query agent 34 then validates whether this is a valid and authentic query e.g. using the query RSA public key. In a next step, The query agent 34 performs the query by applying the query on the CPE device management data model 31. The query agent 34 in particular selects specific data of the CPE device management data model 31, e.g. object parameter values, and matches any condition, e.g. parameter values matching certain strings.

The query may address for example all residential gateways, up to millions, of an Internet service provider, to query the times of all Voice over Internet Protocol (VoIP) calls during the past 24 hours which had a Mean Opinion Score (MOS) below 4. This provides an overview for the Internet service provider which residential gateways had a poor voice service quality during the past 24 hours.

If the query yields a positive result, the query agent 34 triggers the CWMP agent 32 to establish a connection to the ACS 4. The CWMP agent 32 then establishes a management transaction to the ACS 4, step 41, an "Inform" (HTTPS POST) data message. The results of the query are included in the Inform parameter list of the "Inform" message so that the ACS 4 does not need to issue additional remote procedure calls (RPCs) to gather them. In addition to standard Inform events, such as "6 CONNECTION REQUEST", the "Inform" data message may contain a specific information event, e.g. "X 000E50 Query" to notify the ACS 4 of the delivery of the query results.

The ACS 4 acknowledges the "Inform" (HTTPS POST) data message of each CPE device 30 by sending an "InformResponse" (HTTPS 200) status message, step 42, to the respective CPE devices 30. The respective CPE devices 30 then terminate the their management transaction by sending a message "EmptyPOST" (HTTPS POST), step 43. The ACS 4 then acknowledges the successful management transaction by sending a status command "No Content" (HTTPS 204), an empty HTTPS response, step 44.

The invention describes therefore an efficient method for a large scale ad hoc diagnostics data collection from CPE devices. The CPE devices join a multicast group with regard to a respective device management data model in a network service provider network. Whenever the network service provider wishes to collect diagnostics information, he multicasts a query on the CPE data model, using a standard query language. The respective individual CPE devices receive the query, run the query locally against their data model, and construct the query result by processing the information down to only the actual useful data. Only when the query effectively returns a useful result, e.g. actually experienced connection problems, the CPE devices communicate the result to the ACS by means of a unicast message, for example by using an "Inform" remote procedure call to notify the ACS of the query result. The query server sends only one query packet, which is received by all CPE devices, or by all CPE devices with respect to a device management data model.

The described method has in particular the advantage that it is complementary and compliant to existing standard wide area network infrastructure including ACS servers and can be added to such an infrastructure therefore without any modification of the infrastructure. By addressing existing state of the art network infrastructure, scalability limitations are avoided. The invention enables new use-cases in a most efficient, hence cost-effective, way without impacting the CWMP TR-069 management protocol and can be combined therefore with any existing auto configuration server.

Also other embodiments of the invention may be utilized by one skilled in the art without departing from the scope of the present invention. The invention is in particular not limited to wide area networks using xDSL transmissions and is applicable also to any other wired or wireless broadband technology, for example TV distribution cable, optical transmission, Broadband Over Powerline, WiMax or 3G wireless connectivity. The method and system as described may be used advantageously also for all kinds of CPE devices, e.g. residential gateways, routers, switches, telephones and set-top boxes, including also cell phones, tablet PCs and other remotely controlled CPE devices. The invention also applies to non-CWMP management protocols (e.g. SNMP), and non-UDP multicast mechanisms like Layer 5 (Application Level) Multicast. The invention resides therefore in the claims herein after appended.

## Claims

1. Method for querying data from a multitude of customer-premises equipment devices (2, 3, 30) via a wide area network (1, 4-6), **comprising the steps of**
utilizing a query server (20) for sending of a multicast query towards the customer-premises equipment devices (2, 3, 30), for requesting data from the customer-premises equipment devices,
the customer-premises equipment devices (2, 3, 30) evaluating the requests, and when a response is required,
the customer-premises equipment devices (2, 3, 30) establishing a connection to an auto configuration server (4) of the wide area network (1, 5, 6), and
reporting the requested data to the auto configuration server (4).

2. The method of claim 1, comprising the step of sending the multicast query to all of the customer-premises equipment devices (2, 3, 30) in accordance with a device management data model (31).

3. The method of claim 1 or 2, comprising the step of sending the multicast query to all of the customer-premises equipment devices (2, 3, 30) connected to the query server (1) and/or connected to the auto configuration server (4).

4. The method of claim 1, 2 or 3, wherein the query server (20) is arranged within a network service provider network (1) and is operating in parallel with the auto configuration server (4).

5. The method of one of the preceding claims, wherein the auto configuration server (4) is separate from the query server (20), or the auto configuration server (4) is acting as the query server (20).

6. The method of one of the preceding claims, comprising the step of using a UDP datagram protocol for sending of the multicast query.

7. The method of one of the preceding claims, comprising the step of using a unicast message for reporting the requested data to the auto configuration server (4).

8. The method of one of the preceding claims, comprising the step of using a query agent (34) within each of the customer-premises equipment devices (2, 3, 30) for establishing the connection to the auto configuration server (4) by using a TR-069 management protocol.

9. System comprising a multitude of customer-premises equipment devices (2, 3, 30) and a wide area network (1, 4-6) including an auto configuration server (4) coupled with the customer-premises equipment devices, **characterized by**
a query server (20) for sending of a multicast query towards the customer-premises equipment devices, for requesting data from the customer-premises devices, wherein the customer-premises equipment devices evaluate the requests, and when a response is required, the respective customer-premises equipment device establishes a connection to the auto configuration server and report the requested data to the auto configuration server.

10. The system of claim 9, wherein the auto configuration server (4) is separate from the query server (20), or the auto configuration server (4) is acting as the query server (20).

11. The system of claim 9 or 10, wherein the auto configuration server (4) and the query server (20) are a part of a network service provider network (1).

12. The system of claim 9 or 10, wherein the customer-premises equipment devices (2, 3, 30) and the wide area network (1, 4-6) are coupled via xDSL or any other broadband access mechanism like TV distribution cable, optical transmission, Broadband Over Powerline, WiMax or 3G wireless connectivity.

13. Customer-premises equipment device for a system according to one of the claims 9 - 12.

14. The customer-premises equipment device of claim 13, comprising a device management data model (31), a CWMP agent (32), a connection request server (33) and a query agent (34) for operating with a query server (20) and an auto configuration server (4).

15. The customer-premises equipment device of claim 13 or 14, wherein the customer-premises equipment device is a residential gateway (2), a set-top box (3) or a cell phone.
